# EUROPÄISCHE PATENTSCHRIFT

(11) **EP 0 638 462 B1**
(45) Veröffentlichungstag und Bekanntmachung des Hinweises auf die Patenterteilung: **21.05.1997**
(21) Anmeldenummer: 94111399.5
(22) Anmeldetag: 21.07.1994
(51) Int. Cl.: B60R 9/058

(54) **Stützfuss für Dachlastenträger für Kraftfahrzeuge**
Supporting leg for a roof rack of a motor vehicle
Pied pour porte-bagages de véhicules

(30) Priorität: 11.08.1993 DE 4326962
(43) Veröffentlichungstag der Anmeldung: 15.02.1995
(73) Patentinhaber: silvretta-sherpas Sportartikel GmbH, D-85757 Karlsfeld (DE)
(72) Erfinder: Eugler, Norbert, D-85757 Karlsfeld (DE)
(74) Vertreter: Zmyj, Erwin, Dipl.-Ing., Dipl.-Wirtsch.-Ing.

(56) Entgegenhaltungen:
- EP-A- 0 423 815
- EP-A- 0 503 310
- DE-A- 3 032 099
- DE-A- 3 718 727
- DE-A- 3 802 160

## Beschreibung

Die Erfindung bezieht sich auf einen Stützfuß für Dachlastenträger für Kraftfahrzeuge mit mindestens einer Aufnahmeöffnung für die Aufnahme des Schaftes einer Befestigungsschraube, die in eine im Kraftfahrzeugdach vorgesehene Gewindehülse einschraubbar ist, sowie einem von einer äußeren Begrenzungskante des Stützfußes bis zur Aufnahmeöffnung führenden Einführschlitz für den Schaft der Befestigungsschraube.

Bei einem bekannten Stützfuß dieser Art (DE 38 02 160 A1) weist die Befestigungsschraube einen Senkkopf, d.h. eine kegelförmige Anlagefläche des Schraubenkopfes auf. Hierdurch ist zwar das Einführen des Stützfußes zwischen die Dachfläche und den Schraubenkopf, der in die Gewindehülse im Kraftfahrzeugdach eingeschraubten Befestigungsschraube erleichtert, doch ist der kegelstumpfförmige Schraubenkopf nicht in der Lage den Stützfuß auch bei etwas gelockerter Befestigungsschraube zu sichern.

Aufgabe der Erfindung ist es, den Stützfuß so auszugestalten, daß auch bei gelockerter Befestigungsschraube der Stützfuß unverlierbar am Kraftfahrzeugdach gesichert ist.

Diese Aufgabe wird durch die im Anspruch 1 angegebenen Mittel gelöst.

Durch die konzentrisch zur Aufnahmeöffnung ausgebildete zylindrische Formschlußaufnahme für die formschlüssige Aufnahme eines der Formschlußaufnahme zumindest in dem dem Schaft der Befestigungsschraube angrenzenden Bereich angepaßten zylindrischen Teil des Schraubenkopfes der Befestigungsschraube, ist auch dann noch der Stützfuß gegen ein Abziehen vom Dach gesichert, wenn die Schraube sich gelockert hat, was bei Flachkopfschrauben oder bei Schrauben mit kegelförmigen Schraubenkopf nicht der Fall war. An einem Dachlastenträger greifen nämlich so starke Windkräfte an, daß bei Lockerung der Befestigungsschraube bei den bisher bekannten Ausführungen die Gefahr eines Lösens des Dachlastenträgers vom Dach des Kraftfahrzeuges bestand.

Eine bevorzugte Ausgestaltung der Erfindung besteht darin, daß die Formschlußaufnahme durch eine Einprägung des Stützfußes gebildet ist. Diese Art der Formschlußaufnahme kann ohne zusätzliche Teile mit einfachen Werkzeugen hergestellt werden.

Wenn in weiterer Ausgestaltung der Erfindung die durch die Einprägung an der Rückseite des Stützfußes gebildete Erhebung im zusammengebauten Zustand in eine in der Gewindehülse ausgebildete und der Erhebung formschlüssig angepaßten Ausnehmung eingreift, so ist ein Formschluß zwischen Stützfuß und Gewindehülse geschaffen, der nicht nur eine genauere Fixierung des Stützfußes am Kraftfahrzeugdach, sondern auch eine bessere Lastaufnahme ermöglicht, da nun der Stützfuß nicht nur auf dem Schaft der Befestigungsschraube, sondern auch aufgrund der Erhebung in der Gewindehülse abgestützt ist. Außerdem wird hierdurch die Sicherung des Stützfußes bei gelockerter Schraube noch verbessert.

Die Formschlußaufnahme kann nach einer anderen Ausgestaltung der Erfindung durch eine erhabene Einfassung gebildet sein, wobei die erhabene Einfassung in vorteilhafter Weise durch einen am Stützfuß befestigten Ring mit Einführschlitz gebildet ist. Die erhabene Einfassung kann aber auch in weiterer Ausgestaltung der Erfindung durch Formprägen einer aus dem Stützfuß teilweise ausgestanzten und um 90° abgewickelten Lasche gebildet sein.

Wenn in weiterer vorteilhafter Ausgestaltung der Erfindung die axiale Ausdehnung der Formschlußaufnahme mindestens einer Gewindeganghöhe der Befestigungsschraube entspricht, so ist bereits eine ausreichende Sicherheit im praktischen Betrieb gewährleistet.

Nach einer weiteren Ausgestaltung der Erfindung ist es auch möglich die Formschlußaufnahme durch eine konzentrisch zur Aufnahmeöffnung ausgebildete Formschlußbohrung zu bilden, in die ein am Schraubenkopf ausgebildeter zylindrischer Ansatz eingreift, dessen Länge mindestens einer Gewindeganghöhe der Befestigungsschraube entspricht.

Der zylindrische Teil des Schraubenkopfes bzw. der zylindrische Ansatz kann in weiterer Ausgestaltung der Erfindung durch eine zylindrische Beilegscheibe gebildet sein. Hierdurch kann der Schraubenkopf auch eine von der Zylinderform abweichende Form aufweisen. Die Beilegscheibe übernimmt somit die Aufgabe den gewünschten Formschluß und damit die Sicherung des Stützfußes herbeizuführen. Durch die Anordnung einer Beilegscheibe wird außerdem noch der Vorteil erzielt, daß die mit einem Korrosionsschutz überzogenen Stützfüße beim Festschrauben der Befestigungsschraube nicht beschädigt werden, da sich die Beilegscheibe am Stützfuß anlegt und die Drehbewegung, die ohne Beilegscheibe zwischen Schraubenkopf und dem Korrosionsschutz des Stützfußes stattfinden würde, nun zwischen dem Schraubenkopf und der Beilegscheibe eintritt, so daß der Stützfuß geschont wird.

Wenn in weiterer Ausgestaltung der Erfindung die Beilegscheibe mit axialem Spiel, welches geringer ist als die Dickenabmessung des Stützfußes im Bereich des Einführschlitzes, unverlierbar auf dem Schaft der Befestigungsschraube gehalten ist, so wird die Sicherheit bei gelockerter Befestigungsschraube noch erhöht, da auch bei etwas gelöster Befestigungsschraube entsprechend dem axialen Spiel, eine Relativbewegung zwischen Befestigungsschraube und Beilegscheibe eintritt, mit der Folge, daß die Beilegscheibe noch in der Formschlußaufnahme verbleibt und somit die Sicherung des Stützfußes gewährleisten kann, obwohl der Schraubenkopf sich nicht mehr im Bereich der Formschlußaufnahme befindet.

Die Erfindung wird nachfolgend anhand mehrerer Ausführungsbeispiele näher erläutert. In der Zeichnung zeigen:
- Figur 1:: eine erste Ausgestalung eines Stützfußes vor seiner Befestigung;
- Figur 2:: den Stützfuß nach Figur 1 im befestigten Zustand;
- Figur 3:: eine weitere Ausführungsform eines Stützfußes im unbefestigten Zustand;
- Figur 4:: eine Abänderung des Stützfußes nach Figur 3 im befestigten Zustand;
- Figur 5:: eine weitere Ausführungsform des Stützfußes im unbefestigten Zustand;
- Figur 6:: einen Schnitt durch den Stützfuß nach Figur 5 im Bereich der Befestigungsschraube im befestigten Zustand;
- Figur 7:: eine Abwandlung des Stützfußes nach den Figuren 5 und 6; und
- Figur 8:: eine weitere Ausführungsform eines Stützfußes nach der Erfindung.

Wie aus den Figuren ersichtlich, die einen Dachlastenträger im Bereich des Stützfußes in schematischer Form zeigen, ist der Dachlastenträger mit 1, sein Tragholm mit 2 und der Stützfuß mit 3 bezeichnet. Ein solcher Dachlastenträger ist zur Befestigung auf einem Kraftfahrzeugdach 4 vorgesehen, bei welchem im nicht näher dargestellten Dachholm an der Außenseite eine Gewindehülse 5 eingesetzt ist, in welche eine Befestigungsschraube 6 einschraubbar ist. Die Befestigungsschraube weist einen mit Gewinde versehenen Schaft 7 und einen zylinderförmigen Kopf 8 auf. Die Befestigungsschraube 6 ist als Imbußschraube mit einem Innensechskant 9 ausgeführt.

Um den Stützfuß in einfacher Weise am Kraftfahrzeugdach 4 befestigen zu können, weist dieser ausgehend von seiner unteren Begrenzungskante einen nach oben ausgeführten Einführschlitz 10 auf, der in einer Aufnahmeöffnung 11 endet, deren oberen Begrenzungskante 12 auf dem Schaft 7 der Befestigungsschraube 6 aufruht, wenn sich der Stützfuß in seiner Endposition auf dem Kraftfahrzeugdach 4 befindet. Nach dem Aufstecken des Stützfußes 3 auf die Befestigungsschraube 6 in Richtung des Pfeiles 13 wird die Befestigungsschraube 6 festgezogen, bis sie mit ihrer flachen Anlagefläche des Schraubenkopfes 8 am Stützfuß 3 anliegt und diesen gegen das Kraftfahrzeugdach 4 bzw. die Gewindehülse 5 drückt.

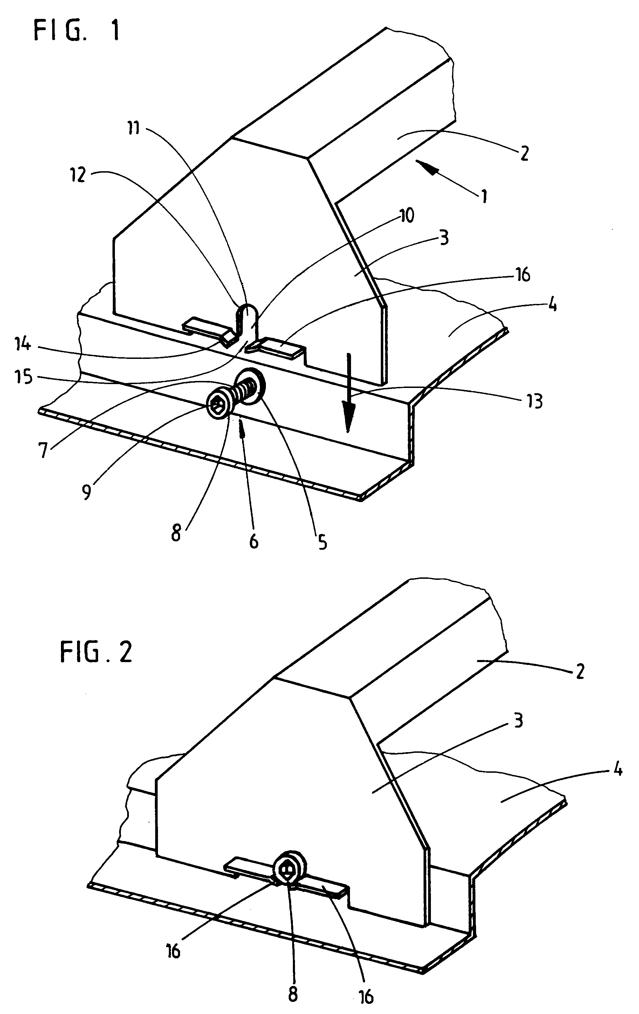

Zur Sicherung des Stützfußes in seiner Befestigungslage ist am Stützfuß 3 eine zylindrische Formschlußaufnahme 14 mit Einführschlitz 15 konzentrisch zur Aufnahmeöffnung 11 ausgebildet. In dem in den Figuren 1 und 2 dargestellten Ausführungsbeispiel ist die Formschlußaufnahme als erhabene Einfassung durch Formprägen einer aus dem Stützfuß teilweise ausgestanzten und um 90° abgewinkelten Lasche 16 gebildet. Im festgelegten Zustand, der in Figur 2 dargestellt ist, umgreift die Formschlußaufnahme 14 den zylindrischen Schraubenkopf 8 in seinem unteren Bereich und verhindert somit ein Abheben des Stützfußes entgegen der Richtung des Pfeiles 13. Im dargestellten Ausführungsbeispiel beträgt die axiale Länge der Formschlußaufnahme 14 mehrere Gewindeganghöhen, so daß auch bei gelockerter Befestigungsschraube 6 ein Abheben des Stützfußes 3 nicht möglich ist.

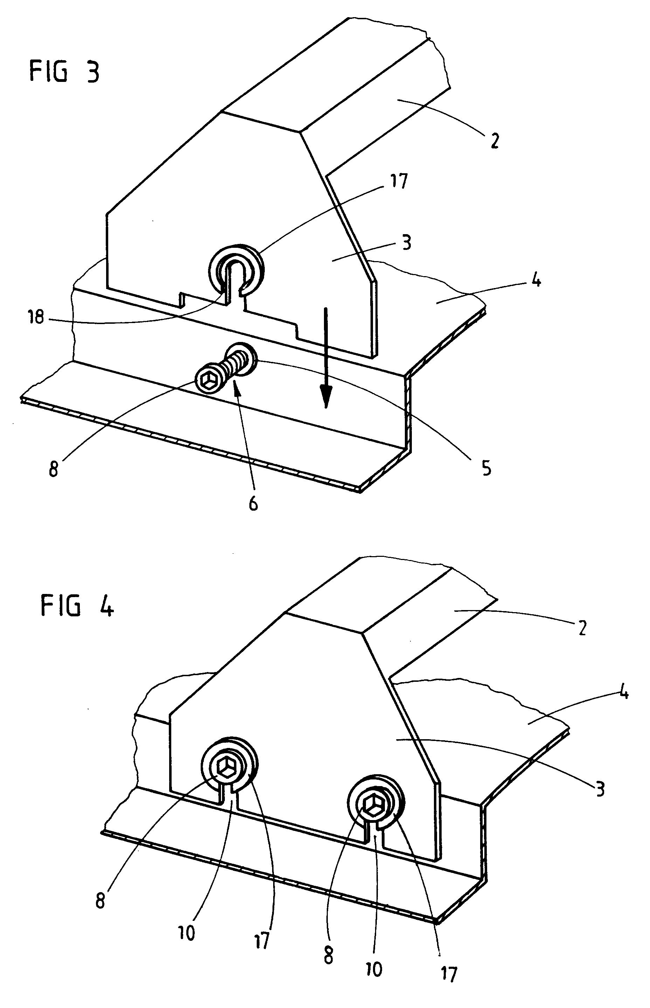

Die Figuren 3 und 4 zeigen eine andere Ausbildung der Formschlußaufnahme. Bei diesen Ausführungsbeispielen, die sich nur durch die Anzahl der Einführschlitze 10 und damit durch die unterschiedliche Anzahl der Befestigungsschrauben 6 unterscheiden, ist die Formschlußaufnahme durch eine erhabene Einfassung in Form eines Ringes 17 mit Einführschlitz 18 gebildet, der mit dem Einführschlitz 10 am Stützfuß 3 fluchtet. Die als Ring ausgebildete Formschlußaufnahme 17 ist innen zylinderförmig ausgebildet und umschließt bis auf den Einführschlitz 18 nahezu den gesamten zylindrischen Schraubenkopf 8 formschlüssig. Da die Ausdehnung der Formschlußaufnahme 17 in axialer Richtung, d.h. die Dicke des Ringes ein Mehrfaches einer Gewindeganghöhe entspricht, ist eine Sicherung des Stützfußes auch bei gelockerter Schraube gegeben, da ein Abziehen des Stützfußes von der Befestigungsschraube 6 erst dann möglich ist, wenn der zylindrische Schraubenkopf 8 vollständig aus der Formschlußaufnahme 17 herausgeschraubt ist. Bei der Ausführungsform nach Figur 4 sind zwei solcher Formschlußaufnahmen 17 für zwei Befestigungsschrauben 6 vorgesehen. Die Ausbildung der Einführschlitze 10 und diejenige der Formschlußaufnahmen 17 entsprechen der Ausgestaltung der Einzelanordnung nach Figur 3.

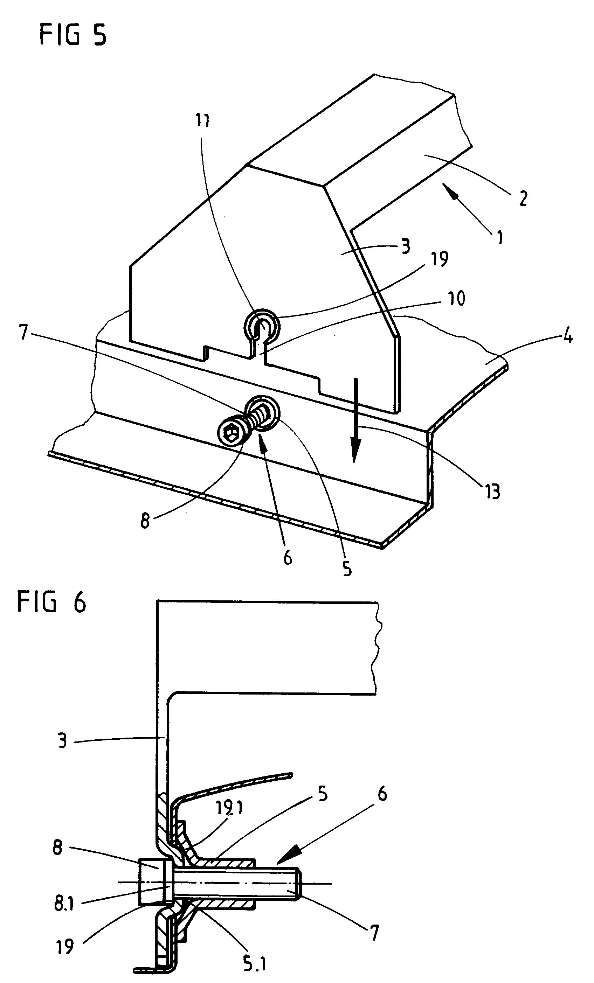

Bei der in den Figuren 5 und 6 dargestellten Ausführungsform entspricht die Gesamtausbildung und Anordnung des Kraftfahrzeugdaches, der Gewindehülse und des Stützfußes im wesentlichen den Ausgestaltungen nach den bisher beschriebenen Figuren, weshalb die gleichen Bezugszahlen verwendet werden. Nur die Formschlußaufnahme ist gegenüber den bisherigen Ausgestaltungen abgeändert. Diese in den Figuren 5 und 6 dargestellte Formschlußaufnahme ist als zylinderförmige Einprägung 19 ausgebildet, die konzentrisch um die Aufnahmeöffnung 11 ausgebildet ist. Auch hier ist ein Einführschlitz 10 vorgesehen, der in die Aufnahmeöffnung 11 hineinreicht. Der Einführschlitz 10 erstreckt sich damit durch die Formschlußaufnahme 19 hindurch, die im befestigten Zustand, wie aus Figur 6 ersichtlich, den zylinderförmigen Schraubenkopf 8 formschlüssig bis auf die durch den Einführschlitz 10 bedingte Aussparung umgreift. Die Tiefe, d.h. die axiale Erstreckung der Formschlußaufnahme 19 entspricht mindestens einer Gewindeganghöhe, so daß auch hier selbst bei einer Lockerung der Befestigungsschraube 6 in der Gewindehülse 5 ein Abheben des Stützfußes 3 nicht möglich ist. Diese in den Figuren 5 und 6 gezeigte Ausführungsform zeichnet sich durch besonders einfache Herstellung aus, da die Formschlußaufnahme 19 durch einfaches Prägen herstellbar ist. Durch das Prägen wird an der Rückseite des Stützfußes 3 eine Erhebung 19.1 gebildet, die im zusammengebauten Zustand in eine der Erhebung formschlüssig angepaßte Ausnehmung 5.1 der Gewindehülse 5 eingreift, wodurch der Stützfuß exakt zentriert und die Sicherung desselben gegen Abheben bei gelockerter Befestigungsschraube vergrößert ist.

Außerdem wird die auf den Stützfuß einwirkende Dachlast besser verteilt, da der Stützfuß nicht nur auf dem Schaft der Befestigungsschraube aufruht, sondern durch diesen Formschluß in der Gewindehülse abgestützt ist.

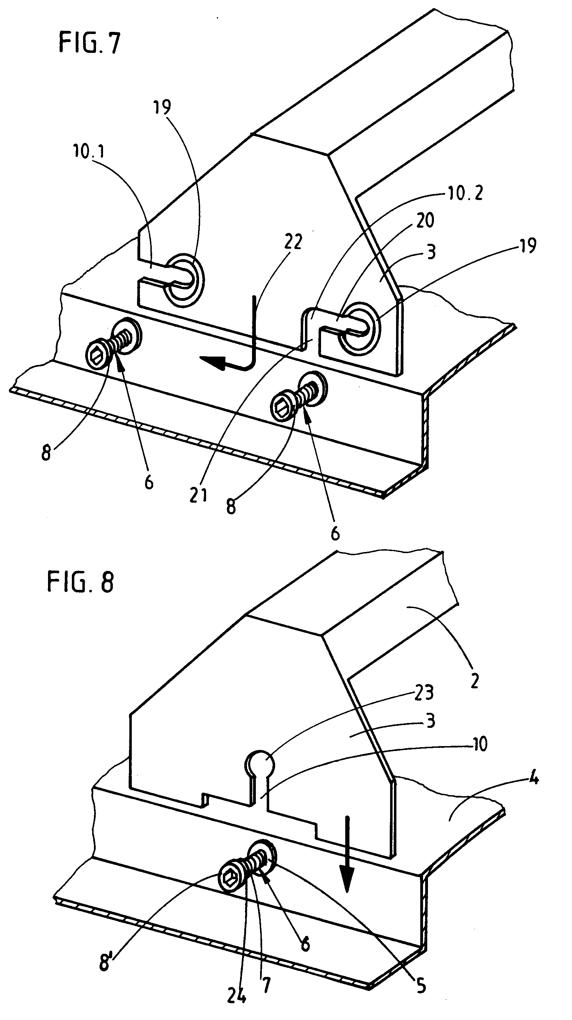

Die Ausgestaltung des Stützfußes nach Figur 7 entspricht hinsichtlich der Ausbildung der Formschlußaufnahme 19 derjenigen nach den Figuren 5 und 6, wobei lediglich die Anordnung der Einführschlitze geändert ist. Bei dieser Ausführungsform sind zwei Einführschlitze 10.1 und 10.2 vorgesehen, von denen sich der in Figur 7 linke Einführschlitz 10.1 zur seitlichen Begrenzungskante des Stützfußes in horizontaler Richtung erstreckt, während der Einführschlitz 10.2 einen horizontalen Abschnitt 20 und einen vertikalen zur unteren Begrenzungskante des Stützfußes 3 verlaufenden Abschnitt 21 umfaßt. Hierdurch ist eine zusätzliche Sicherung gegen ein Abheben des Dachlastenträgers geschaffen, da dieser nach Lösen der Befestigungsschraube 6 sowohl in horizontaler Richtung als auch in vertikaler Richtung entsprechend dem abgeknickten Pfeil 22 bewegt werden muß, um in seine Befestigungsposition zu gelangen und in umgekehrter Richtung bewegt werden muß, um den Dachlastenträger von den Befestigungsschrauben 6 freizubekommen.

Die in Figur 8 dargestellte Ausführungsform unterscheidet sich grundsätzlich von den bisher beschriebenen Ausführungsformen hinsichtlich der Formschlußaufnahme. Stützfuß und Tragholm sind in gleicher Weise ausgebildet, wie dies grundsätzlich aus den bisherigen Figuren zu ersehen ist. Bei dieser in Figur 8 dargestellten Ausführungsform ist ebenfalls ein Einführschlitz 10 ausgebildet, der in vertikaler Richtung bis zur unteren Begrenzungskante des Fußes 3 reicht und an seinem anderen Ende in eine Formschlußbohrung 23 mündet, die konzentrisch zu der sonst üblichen Aufnahmeöffnung ausgebildet ist. Diese als Bohrung 23 ausgebildete Formschlußaufnahme dient zur Aufnahme eines zylindrischen Ansatzes 24, der an den, dem Schaft 7 der Befestigungsschraube 6 zugewandten Ende des Schraubenkopfes 8' ausgebildet ist, der ebenfalls zylinderförmig gestaltet ist. Auch bei dieser Ausführungsform ist die Befestigungsschraube 6 in eine Gewindehülse 5 im Dach 4 des Kraftfahrzeuges einschraubbar. Im befestigten Zustand greift der zylindrische Ansatz 24 in die Formschlußbohrung 23 ein. Da seine axiale Länge mindestens einer Gewindeganghöhe entspricht, ist auch hierdurch der Stützfuß 3 gegen ein Abheben, selbst bei gelockerter Befestigungsschraube 6, gesichert.

## Patentansprüche

1. Stützfuß für einen Dachlastenträger für Kraftfahrzeuge mit mindestens einer Aufnahmeöffnung für die Aufnahme des Schaftes einer Befestigungsschraube, die in eine im Kraftfahrzeug vorgesehene Gewindehülse einschraubbar ist, sowie einem von einer äußeren Begrenzungskante des Stützfußes bis zur Aufnahmeöffnung führenden Einführschlitz für den Schaft der Befestigungsschraube, **dadurch gekennzeichnet,** daß konzentrisch zur Aufnahmeöffnung (11) eine zylindrische Formschlußaufnahme (14, 17, 19, 23) mit Einführschlitz (15, 18, 10) für die formschlüssige Aufnahme eines der Formschlußaufnahme zumindest in dem dem Schaft (7) der Befestigungsschraube (6) angrenzenden Bereich angepaßten zylindrischen Teil des Schraubenkopfes (8) der Befestigungsschraube (6) ausgebildet ist.

2. Stützfuß nach Anspruch 1, **dadurch gekennzeichnet,** daß die Formschlußaufnahme (19) durch eine zylinderförmige Einprägung des Stützfußes (3) gebildet ist.

3. Stützfuß nach Anspruch 2, **dadurch gekennzeichnet,** daß die durch die Einprägung (19) an der Rückseite des Stützfußes (3) gebildete Erhebung (19.1) im zusammengebauten Zustand in eine in der Gewindehülse (5) ausgebildete und der Erhebung (19.1) formschlüssig angepaßten Ausnehmung (5.1) eingreift.

4. Stützfuß nach Anspruch 1, **dadurch gekennzeichnet,** daß die Formschlußaufnahme (14, 17) durch eine erhabene Einfassung gebildet ist.

5. Stützfuß nach Anspruch 4, **dadurch gekennzeichnet,** daß die erhabene Einfassung durch einen am Stützfuß befestigten Ring (17) mit Einführschlitz (18) gebildet ist.

6. Stützfuß nach Anspruch 4, **dadurch gekennzeichnet,** daß die erhabene Einfassung (14) durch Formprägen eines aus dem Stützfuß (3) teilweise ausgestanzten und um 90° abgewinkelten Lasche (16) gebildet ist.

7. Stützfuß nach einem der Ansprüche 1 bis 6, **dadurch gekennzeichnet,** daß die axiale Ausdehnung der Formschlußaufnahme (14, 17, 19, 24) mindestens einer Gewindeganghöhe der Befestigungsschraube (6) entspricht.

8. Stützfuß nach Anspruch 1, **dadurch gekennzeichnet,** daß die Formschlußaufnahme durch eine konzentrisch zur Aufnahmeöffnung (11) ausgebildete Formschlußbohrung (23) gebildet ist, in die ein am Schraubenkopf (8') ausgebildeter, zylindrischer Ansatz (24) eingreift, dessen Länge mindestens einer Gewindeganghöhe der Befestigungsschraube (6) entspricht.

9. Stützfuß nach einem der Ansprüche 1 bis 8, **dadurch gekennzeichnet,** daß der zylindrische Teil des Schraubenkopfes (8) bzw. der zylindrische Ansatz (24) durch eine zylindrische Beilegscheibe (8.1) gebildet ist.

10. Stützfuß nach Anspruch 9, **dadurch gekennzeichnet,** daß die Beilegscheibe (8.1) mit axialem Spiel, welches geringer ist als die Dickenabmessung des Stützfußes (3) im Bereich des Einführschlitzes (10), unverlierbar auf dem Schaft (7) der Befestigungsschraube (6) gehalten ist.

## Claims

1. Supporting leg for a roof rack for motor vehicles with at least one location hole for receiving the shank of a fixing screw which can be screwed into a threaded sleeve provided in the motor vehicle and an entry slot for the shank of the fixing screw leading from an outer boundary edge of the supporting leg to the location hole, characterised in that a cylindrical form-fit holder (14, 17, 19, 23) with an entry slot (15, 18, 10) for the form-fit reception of a cylindrical part of the screw head (8) of the fixing screw (6) adapted to the form-fit holder at least in the region adjacent to the shank (7) of the fixing screw (6) is provided concentrically with the location hole (11).

2. Supporting leg according to claim 1, characterised in that the form-fit holder (19) is formed by a cylindrical boss on the supporting leg (3).

3. Supporting leg according to claim 2, characterised in that the raised portion (19.1) formed on the rear of the supporting leg (3) by the boss (19) engages in the assembled state in a recess (5.1) formed in the threaded sleeve (5) and adapted in a form-fit manner to the raised portion (19.1).

4. Supporting leg according to claim 1, characterised in that the form-fit holder (14, 17) is formed by a raised border.

5. Supporting leg according to claim 4, characterised in that the raised border is formed by a ring (17) with an entry slot (18) fixed to the supporting leg.

6. Supporting leg according to claim 4, characterised in that the raised border (14) is formed by stamping a strap (16) partially punched out of the supporting leg (3) and bent at an angle of 90°.

7. Supporting leg according to one of claims 1 to 6, characterised in that the axial expansion of the form-fit holder (14, 17, 19, 24) corresponds at least to one thread pitch of the fixing screw (6).

8. Supporting leg according to claim 1, characterised in that the form-fit holder is formed by a form-fit bore (23) formed concentrically with the location hole (11), engaged by a cylindrical shoulder (24) formed on the screw head (8'), the length of which corresponds to at least one thread pitch of the fixing screw (6).

9. Supporting leg according to one of claims 1 to 8, characterised in that the cylindrical part of the screw head (8) or of the cylindrical shoulder (24) is formed by a cylindrical washer (8.1).

10. Supporting leg according to claim 9, characterised in that the washer (8.1) is captivated on the shank (7) of the fixing screw (6) with axial play smaller than the thickness of the supporting leg (3) in the region of the entry slot (10).

## Revendications

1. Pied pour un porte-bagages de véhicules automobiles avec au moins un trou de logement destiné à loger la tige d'une vis de fixation qui peut être vissée dans une douille taraudée prévue dans le véhicule et avec une fente d'introduction conduisant d'un bord extérieur du pied jusqu'au trou de logement et destinée à la tige de la vis de fixation, caractérisé en ce qu'un logement géométrique cylindrique (14, 17, 19, 23) avec une fente d'introduction (15, 18, 10) pour le logement géométrique d'une partie cylindrique, adaptée au logement géométrique au moins dans la zone adjacente à la tige (7) de la vis de fixation (6), de la tête (8) de la vis de fixation (6) est prévu concentrique au trou de logement (11).

2. Pied selon la revendication 1, caractérisé en ce que le logement géométrique (19) est formé par un matriçage cylindrique du pied (3).

3. Pied selon la revendication 2, caractérisé en ce que la bosse (19.1), formée par le matriçage (19) sur l'arrière du pied (3), pénètre, à l'état monté, dans un creux (5.1) prévu dans la douille taraudée (5) et géométriquement adapté à la bosse (19.1).

4. Pied selon la revendication 1, caractérisé en ce que le logement géométrique (14, 17) est formé par une bordure en relief.

5. Pied selon la revendication 4, caractérisé en ce que la bordure en relie£ est formée par un anneau (17) fixé au pied et comportant une fente d'introduction (18).

6. Pied selon la revendication 4, caractérisé en ce que la bordure en relief (14) est formée par matriçage d'une languette (16) partiellement découpée à la matrice dans le pied (3) et coudée à 90°.

7. Pied selon l'une des revendications 1 à 6, caractérisé en ce que la dimension axiale du logement géométrique (14, 17, 19, 24) correspond au moins à une hauteur de pas de vis de la vis de fixation (6).

8. Pied selon la revendication 1, caractérisé en ce que le logement géométrique est formé par un trou géométrique (23) qui est prévu concentrique au trou de logement (11) et dans lequel pénètre une embase cylindrique (24) qui est prévue sur la tête de vis (8') et dont la longueur correspond au moins à une hauteur de pas de vis de la vis de fixation (6).

9. Pied selon l'une des revendications 1 à 8, caractérisé en ce que la partie cylindrique de la tête de vis (8) ou l'embase cylindrique (24) est formée par une rondelle de calage (8.1) cylindrique.

10. Pied selon la revendication 9, caractérisé en ce que la rondelle de calage (8.1) est maintenue imperdable sur la tige (7) de la vis de fixation (6) avec un jeu axial qui est plus petit que l'épaisseur du pied (3) dans la zone de la fente d'introduction (10).
